# EUROPÄISCHE PATENTSCHRIFT

(11) **EP 1 262 256 B1**
(45) Veröffentlichungstag und Bekanntmachung des Hinweises auf die Patenterteilung: **07.07.2004**
(21) Anmeldenummer: 02008995.9
(22) Anmeldetag: 23.04.2002
(51) Int. Cl.: B21D 53/12, F16C 33/54

(54) **Wälzlagerkäfig**
Roller bearing cage
Cage pour palier à roulement

(30) Priorität: 30.05.2001 DE 10126217
(43) Veröffentlichungstag der Anmeldung: 04.12.2002
(73) Patentinhaber: INA- Schaeffler KG, 91074 Herzogenaurach (DE)
(72) Erfinder: Fugel, Wolfgang, 90453 Nürnberg (DE); Müntnich, Leo, 91086 Aurachtal (DE); Reimchen, Alexander, 90765 Fürth (DE)

(56) Entgegenhaltungen:
- DE-A- 2 147 170
- DE-A- 19 740 435
- US-A- 3 992 764

## Beschreibung

### Anwendungsgebiet der Erfindung

Die Erfindung betrifft einen aus einem Blechband gerollten Käfig für zylindrische Wälzkörper, insbesondere Nadelkäfig, mit zwei Seitenringen, die durch Taschen bildende profilierte Stege miteinander verbunden sind, wobei die Stege aus zueinander parallel verlaufenden, teils innerhalb und teils außerhalb des Teilkreises liegenden Abschnitten bestehen, die durch schräg zur Käfigachse verlaufende Abschnitte miteinander verbunden sind.

### Hintergrund der Erfindung

Ein derart gattungsgemäß ausgebildeter Käfig ist aus der DE-OS 21 47 170 vorbekannt. Bei diesem bekannten Verfahren geht man von einem flachen Blechband aus, das man durch Walzen in das gewünschte Querschnittsprofil bringt, wobei man entweder vor dem Profilieren oder daran anschließend die Taschen für die Aufnahme der Wälzkörper ausstanzt und schließlich das Band rundbiegt und ggf. an den Stoßstellen verschweißt. Bei solch dünnwandigen profilgebogenen M- bzw. W-Käfigen werden die Wälzkörper durch innerhalb und außerhalb des Teilkreises angeordnete Haltekanten gehalten. Die Käfige werden aus dünnwandigem Blech hergestellt, da die geringe Wandstärke eine besonders wirtschaftliche Herstellung der Taschen durchs Stanzen ermöglicht.

Dies hat jedoch den Nachteil, dass Stanzausrisse und insgesamt rauhe Stanzflächen an den Stegen gebildet werden, d h. die Führungsflächen für die Wälzkörper sind insgesamt rauh und ungenau. Rauhe Stegflächen aber, gegen die die Nadeln anlaufen, ergeben Abrieb. Ungenaue Stegflächen wiederum führen zu einem axialen Schub und axialem Anlauf der Käfigstirnflächen gegen die axialen Begrenzungsflächen des Lagers mit einer erheblichen Flachenpressung. Bei der Losradlagerung in Schaltgetrieben kann das dazu führen, dass die Losradlager erheblichen Quer- bzw. Schränkungskräften ausgesetzt sind und zu Taumelbewegungen neigen. Ein anderer Nachteil ist durch das Ausstanzen der Taschen vor dem Rundbiegen des Käfigbandes gegeben. Im fertigen Käfig weisen dann die Taschen in Richtung Lagermittelpunkt ein V-förmiges Profil auf, so dass die Gefahr der Klemmung der Wälzkörper besteht.

Ausgehend von diesem Stand der Technik hat man in der DE 197 40 435 A1 versucht, diesen Nachteil, d. h. die V-förmige Ausbildung der die Lagernadeln aufnehmenden Taschen des Käfigs im fertig gebogenem Zustand, zu vermeiden. Dies erfolgt derart, dass nach dem Ausstanzen der Taschen durch einen zusätzlichen Formgebungsvorgang, dem Fachmann unter dem Begriff Anprägen bekannt, die Käfigtaschen durch Werkstoffverdrängung in eine für die präzise Funktion des Käfigs erforderliche Form gedrückt werden. Dies heißt in erster Linie, dass die Wälzkörper im Bereich des Teilkreises am Käfigsteg anliegen und nicht wie bisher, inner- oder außerhalb des Teilkreises. Durch diese Führung im Teilkreisbereich, die durch parallel zueinander verlaufende Führungsflächen der Taschen gegeben ist, werden die unerwünschten Quer- bzw. Schränkungskräfte auf den Käfig vermieden.

Nachteilig dabei ist, dass diese verbesserte Funktion des Käfigs durch einen zusätzlichen Arbeitsgang, dem sogenannten Anprägen, erkauft werden muss. Das Anprägen erfolgt derart, dass jeder einzelne Steg eines Käfigs beidseitig von zwei zangenartigen Prägewerkzeugen mit einer Kraft beaufschlagt wird, so dass eine Werkstoffverdrängung im Stegbereich realisiert ist. Es liegt auf der Hand, dass eine solche Fertigungstechnologie aufgrund der aufwendigen Bearbeitung eines jeden einzelnen Steges sehr aufwendig und damit teuer ist.

### Zusammenfassung der Erfindung

Der Erfindung liegt die Aufgabe zu Grunde, einen gattungsgemäßen Käfig derart weiterzuentwickeln, dass er seine hervorragenden Laufeigenschaften, d. h. das Anlaufen der Wälzkörper im Teilkreisbereich, auch ohne einen zusätzlichen Arbeitsgang während seines Herstellungsprozesses realisieren kann.

Erfindungsgemäß wird diese Aufgabe bei dem gattungsgemäßen Käfig nach dem kennzeichnenden Teil von Anspruch 1 dadurch gelöst, dass im profilierten, gestanzten und ungebogenen Zustand des Blechbandes im Bereich der schräg verlaufenden Abschnitte die Taschen in der Draufsicht gesehen einen gekrümmten Verlauf derart nehmen, dass ein in axialer Richtung innenliegender erster konvexer Bogen B1 in einen außen liegenden zweiten konkaven Bogen B2 übergeht.

Durch die erfindungsgemäß abgestimmte Taschengeometrie, d. h. durch die spezielle Gestaltung der Stege im Profilsprung zwischen innerhalb und außerhalb des Teilkreises liegenden Abschnitten wird erreicht, dass im fertig gebogenen Zustand die Taschenflanke im Profilübergang radial parallel zur Taschenmitte und ebenso die Taschenflanke axial parallel zum Wälzkörper verläuft. Dies bedeutet, dass der Wälzkörper innerhalb des Teilkreisbereiches an den einzelnen Stegen des Käfigs anläuft. Da diese Taschengeometrie in erfindungsgemäßer Weise allein durch das Stanzen, d. h. ohne den nach dem bisherigen Stand der Technik erforderlichen Anprägevorgang erfolgt, lässt sich ein derartiger Käfig viel schneller und damit wesentlich kostengünstiger herstellen. Die an sich bekannte Trennung zwischen Außen- und Innenhalterung der Wälzkörper einerseits und dem Anlauf der Wälzkörper am Käfig andererseits wird nach der Erfindung erstmalig einzig und allein durch die beim Stanzen erzeugte Taschengeometrie in Verbindung mit dem Rundbiegen des Käfigbandes zum fertigen Käfig erreicht. Dies bedeutet, die Taschengeometrie im ebenen Band muss so gestaltet sein, dass nach dem Rundbiegen die Wälzkörper im Teilkreisbereich anlaufen.

Vorteilhafte Ausführungen der Erfindung sind in den Ansprüchen 2 bis 5 beschrieben.

So ist nach Anspruch 2 vorgesehen, dass der Käfig M-förmig ausgebildet ist, d. h. seine an den Seitenringen sich anschließenden parallel zur Käfigachse verlaufenden Abschnitte außerhalb des Teilkreises angeordnet sind Ist der Käfig nach Anspruch 3 W-förmig gestaltet, so sind seine an den Seitenringen sich anschließenden parallel zur Käfigachse verlaufenden Abschnitte innerhalb des Teilkreises angeordnet.

Nach einem weiteren Merkmal gemäß Anspruch 4 ist vorgesehen, dass der Käfig außen-, innen- oder wälzkörpergeführt ist. Schließlich soll nach einem letzten Merkmal der Erfindung gemäß Anspruch 5 der Käfig in einem Kurbelzapfen- oder in einem Planetenradlager eingesetzt sein, wobei bei diesen Anwendungsfällen aufgrund hoher Umdrehungszahlen große Kräfte auf ihn wirken, die präzise funktionierende Lagerkäfige geradezu verlangen.

In zweckmäßiger Weise wird bei der Herstellung des Käfigs von einem Endlosband ausgegangen, das nach Erreichen seiner gewünschten Banddicke entsprechend der gewünschten späteren Käfigform profiliert wird. Nach dem Profilieren des Käfigbandes werden die Taschen ausgestanzt, bevor die einzelnen Bandstücke zu einem Käfigband rundgerollt werden, dessen Käfigenden ggf. miteinander verbunden werden. Das Ablängen der einzelnen Käfigbänder je nach Größe des späteren Käfigs kann entweder vor dem Profilieren, nach dem Profilieren oder erst nach dem Ausstanzen der Taschen erfolgen.

Die Erfindung wird an nachstehendem Ausführungsbeispiel näher erläutert.

### Kurze Beschreibung der Zeichnungen

Es zeigen:
- Figur 1: einen Ausschnitt aus einer perspektivischen Darstellung eines M-Käfigs nach dem bisherigen Stand der Technik,
- Figuren 2 und 3: einen teilweisen Längs- bzw. Querschnitt durch einen Käfig gemäß Figur 1,
- Figur 4: eine Draufsicht auf ein profiliertes Käfigband in erfindungsgemäßer Ausführung,
- Figur 5: einen Schnitt entlang der Linie V-V in Figur 4,
- Figur 6: eine vergrößerte Darstellung einer Einzelheit X aus Figur 4,
- Figur 7: einen teilweisen Querschnitt durch einen erfindungsgemäß ausgebildeten Käfig,
- Figur 8: einen Ausschnitt einer perspektivischen Darstellung eines erfindungsgemäßen Käfigs und
- Figur 9: einen Ausschnitt aus einem erfindungsgemäßen Käfig in perspektivischer Darstellung von innen betrachtet.

### Ausführliche Beschreibung der Zeichnungen

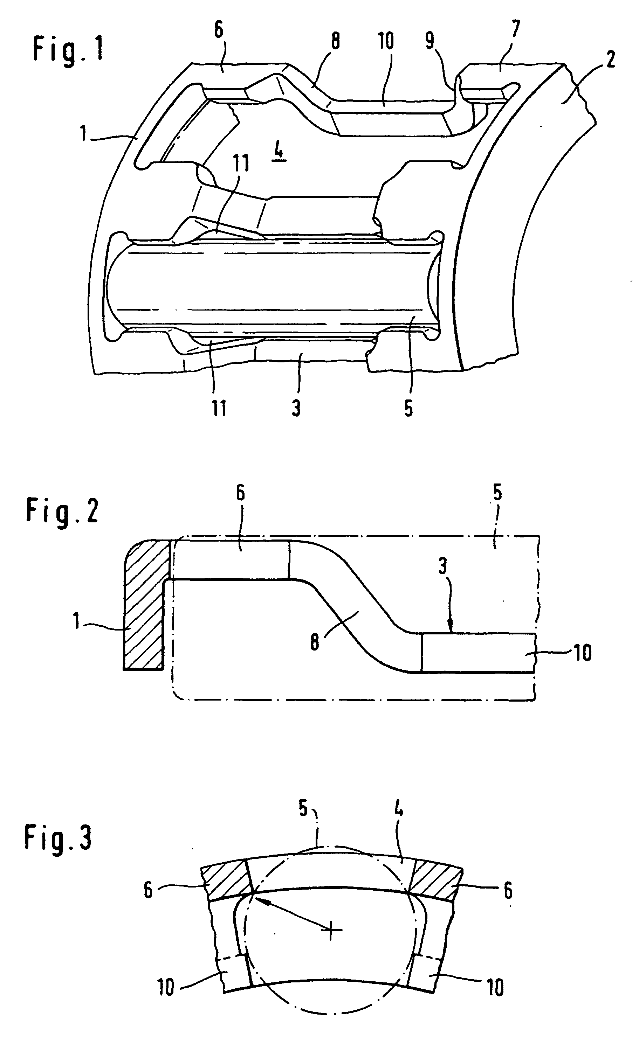

Der in den Figuren 1 bis 3 nach dem bisherigen Stand der Technik dargestellte Käfig besteht aus den Seitenringen 1 und 2, die durch eine Anzahl gleichmäßig um den Umfang verteilt angeordnete profilierte Stege 3 miteinander verbunden sind. Die so entstandenen Taschen 4 zur Aufnahme von Wälzkörpern 5 werden einerseits durch die Seitenringe 1, 2, sowie andererseits durch die Stege 3 begrenzt. Die Stege 3 sind in Richtung Lagermittelpunkt über den Wälzkörperteilkreis durchgekröpft und bestehen aus zwei an die Seitenringe 1, 2 sich anschließende Abschnitte 6, 7, die parallel zur Käfigachse verlaufen. Die Abschnitte 6, 7 liegen außerhalb des Teilkreises und gehen in je einen schräg zur Käfigachse gerichteten Abschnitt 8, 9 über, die sich wiederum zu einem parallel zur Käfigachse verlaufenden und innerhalb des Teilkreises liegenden Abschnitt 10 vereinen. Die inneren Kanten der Stegabschnitte 10 begrenzen das radiale Spiel der Wälzkörper nach innen, während das radiale Spiel nach außen durch die äußeren Stegabschnitte 6, 7 begrenzt ist. Figur 1 ist weiter zu entnehmen, dass im Bereich der schräg verlaufenden Abschnitte 8, 9, d. h. im Profilierungsbereich der Stege beidseitig vom Wälzkörper 5 je ein Freiraum 11 vorhanden ist Dieser freigestellte Bereich ist nach dem bisherigen Stand der Technik erforderlich, um ein Klemmen der Wälzkörper zu verhindern.

Wie aus Figur 3 erkennbar, sind durch den Biegevorgang des ausgestanzten Käfigbandes die Taschen 4 V-förmig ausgebildet d. h. in radialer Richtung nach innen wird ihre lichte Weite geringer. Der Wälzkörper 5 läuft mit seiner Walzflache an der inneren Kante der Stegabschnitte 6, 7 an, so dass er außerhalb des Teilkreises mit den eingangs beschriebenen Nachteilen geführt ist. Diese ungünstigen Anlaufverhältnisse innerhalb der Lagerung sind durch einen vom Zentrum des Wälzkörpers 5 in Richtung Anlauffläche weisenden Pfeil dargestellt.

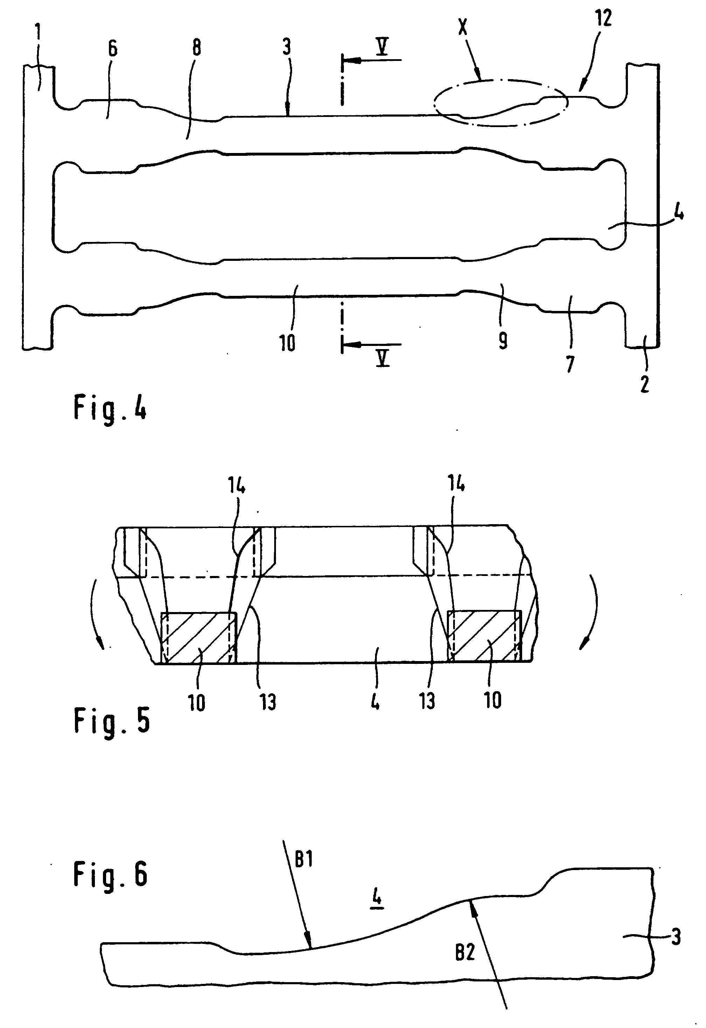

Das in Figur 4 gemäß der Erfindung in der Draufsicht gezeigte Blechband 12 ist profiliert, mit ausgestanzten Taschen 4 versehen und ungebogen. An die beiden Rander, die im gebogenen Zustand die Seitenringe 1, 2 des Käfigs bilden, schließen sich parallel zur späteren Käfigachse verlaufende Abschnitte 6, 7 an, d. h. im rundgebogenen Zustand des Käfigs liegen diese außerhalb des Teilkreises Seitenringe 1, 2 und Abschnitte 6, 7 befinden sich also in der gleichen Ebene. Die Abschnitte 6, 7 werden von den beiden schräg verlaufenden Abschnitten 8, 9 fortgesetzt, die sich anschließend zum Abschnitt 10 vereinen. Im gebogenen Zustand verlaufen die Abschnitte 8, 9 schräg zur Käfigachse, wahrend der Abschnitt 10 parallel zur Käfigachse verläuft und innerhalb des Teilkreises liegt.

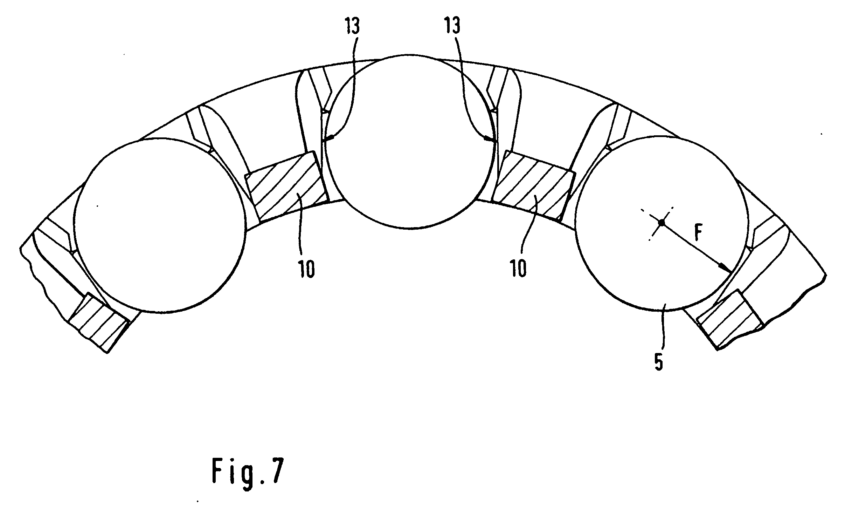

Gegenstand der Erfindung ist die Kontur der Taschen 4 im Bereich der schräg verlaufenden Abschnitt 8, 9, d. h. im Profilsprung. Wie der in Figur 6 vergrößert dargestellte Verlauf erkennen lässt, ist die Kontur der Taschen 4 im Bereich des Profilsprunges S-förmig derart gestaltet, dass der in axialer Richtung innen liegende erste konvexe Bogen B1 in den außen liegenden zweiten konkaven Bogen B2 übergeht. Die Kontur der Tasche 4 im Profilsprung in axialer Richtung von innen nach außen betrachtet nimmt also einen konvex/konkaven Verlauf.

Wie Figur 5 zeigt, sind im Profilsprung die untere und die obere Schnittkante 13, 14 zueinander schräg gestellt, so dass die Tasche 4 sich in der Weite nach unten öffnet. Durch das Rundbiegen in Pfeilrichtung werden die unteren Schnittkanten 13 nahezu parallel zueinander ausgerichtet, wie Figur 7 zeigt. Die Krafteinleitung, durch den Pfeil F zeichnerisch dargestellt, d. h. der Anlauf der Wälzkörper 5 erfolgt also in vorteilhafter Weise nur in Umfangsrichtung. Der wesentliche Vorteil der Erfindung besteht demnach darin, dass allein durch die Gestaltung der Taschengeometrie im Profilsprung während des Stanzens mit dem Rundbiegen des Bandes zu einem Käfig die Trennung zwischen Halterung der Wälzkörper und Anlauf der Wälzkörper im Käfig vollzogen ist. Diese günstigen Anlaufverhältnisse werden im Gegensatz zum bisherigen Stand der Technik nicht durch Anprägen der Stege, sondern einzig und allein durch die Kontur der Taschen realisiert.

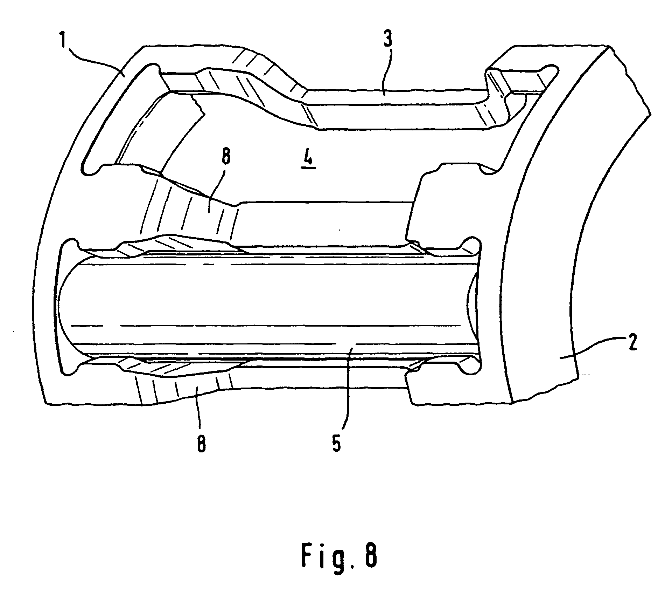

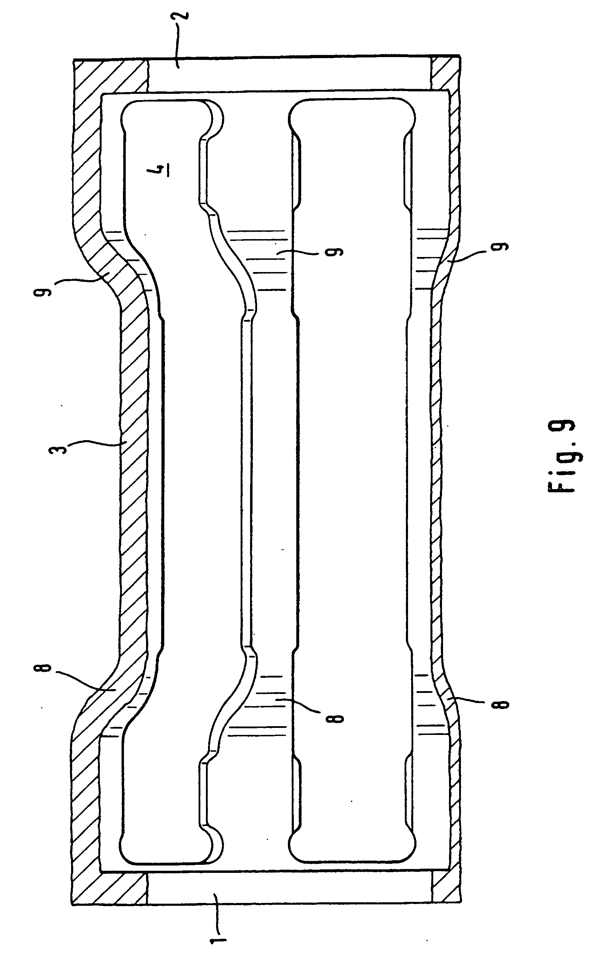

Wie ein Vergleich der Figuren 1 und 8 zeigt, wird durch die Erfindung im Profilsprung, d. h. im Bereich der Stege 3 mit den schräg verlaufenden Abschnitten 8 und 9 zwischen Wälzkörpern 5 und Stegen 3 eine nahezu linienförmige Anlage erreicht, die durch die Kontur der Tasche 4 und durch das Rundbiegen des Bandes 12 zum fertigen Käfig realisiert ist. Dadurch bedingt entfallen die in Figur 1 sichtbaren Freiräume 11 beidseits des Wälzkörpers 5 im Profilsprung. Schließlich ist in Figur 9 die teilweise Innenansicht eines erfindungsgemäßen Käfigs gezeigt. Auch hier ist erkennbar, dass in den Bereichen 8 und 9 eine linienförmige Berührung mit den Wälzkörpern 5 gegeben ist.

### Bezugszeichen

- 1: Seitenring
- 2: Seitenring
- 3: Steg
- 4: Tasche
- 5: Wälzkörper
- 6: Abschnitt
- 7: Abschnitt
- 8: Abschnitt
- 9: Abschnitt
- 10: Abschnitt
- 11: Freiraum
- 12: Band
- 13: untere Schnittkante
- 14: obere Schnittkante

- B1: konvexer Bogen
- B2: konkaver Bogen

## Patentansprüche

1. Aus einem Blechband (12) gerollter Käfig für zylindrische Wälzkörper (5), insbesondere Nadelkafig, mit zwei Seitenringen (1, 2), die durch Taschen (4) bildende profilierte Stege (3) miteinander verbunden sind, wobei die Stege (3) aus zueinander parallel verlaufenden, teils innerhalb und teils außerhalb des Teilkreises liegenden Abschnitten (10, 6, 7) bestehen, die durch schräg zur Käfigachse verlaufende Abschnitte (8, 9) miteinander verbunden sind, **dadurch gekennzeichnet, dass** im profilierten, gestanzten und ungebogenen Zustand des Blechbandes (12) im Bereich der schräg verlaufenden Abschnitte (8, 9) die Taschen (4) in der Draufsicht gesehen einen gekrümmten Verlauf derart nehmen, dass ein in axialer Richtung innen liegender erster konvexer Bogen B1 in einen außen liegenden zweiten konkaven Bogen B2 übergeht.

2. Käfig nach Anspruch 1, **dadurch gekennzeichnet, dass** er M-förmig ausgebildet ist, wobei seine an den Seitenringen (1, 2) sich anschließenden parallel zur Käfigachse verlaufenden Abschnitte (6, 7) außerhalb des Teilkreises angeordnet sind.

3. Käfig nach Anspruch 1, **dadurch gekennzeichnet, dass** er W-förmig ausgebildet ist, wobei seine an den Seitenringen (1,2) sich anschließenden parallel zur Käfigachse verlaufenden Abschnitte (6, 7) innerhalb des Teilkreises angeordnet sind

4. Käfig nach Anspruch 1, **dadurch gekennzeichnet, dass** er außen-, innenoder wälzkörpergeführt ist.

5. Käfig nach Anspruch 1, **dadurch gekennzeichnet, dass** er in einem Kurbelzapfen oder in einem Planetenradlager eingesetzt ist.

## Claims

1. Cage for cylindrical rolling bodies (5) which is rolled out of a sheet-metal band (12), in particular needle cage, with two side rings (1, 2) which are connected to one another by means of profiled webs (3) forming pockets (4), the webs (3) consisting of portions (10, 6, 7) which run parallel to one another and lie partially inside and partially outside the pitch circle, and which are connected to one another by means of portions (8, 9) running obliquely to the cage axis, **characterized in that**, in the profiled, stamped and non-bent state of the sheet-metal band (12), the pockets (4) assume a curved run, as seen in a top view, in the region of the obliquely running portions (8, 9), in such a way that a first convex arc B1 lying on the inside in the axial direction merges into a second concave arc B2 lying on the outside.

2. Cage according to Claim 1, **characterized in that** it is of M-shaped design, its portions (6, 7) which adjoin the side rings (1, 2) and run parallel to the cage axis being arranged outside the pitch circle.

3. Cage according to Claim 1, **characterized in that** it is of W-shaped design, its portions (6, 7) which adjoin the side rings (1, 2) and run parallel to the cage axis being arranged inside the pitch circle.

4. Cage according to Claim 1, **characterized in that** it is guided on the outside, on the inside or by rolling bodies.

5. Cage according to Claim 1, **characterized in that** it is inserted in a crank pin or in a planet-wheel bearing.

## Revendications

1. Cage pour corps de roulement cylindriques (5), roulée à partir d'une bande de tôle (12), notamment cage à aiguilles, avec deux bagues latérales (1, 2), reliées entre elles par des talons (3) profilés formant des poches (4), les talons (3) étant constitués de tronçons (10, 6, 7) s'étendant en parallèle, en partie à l'intérieur et en partie à l'extérieur du cercle divisé, qui sont reliés entre eux par des tronçons (8, 9) s'étendant en oblique par rapport à l'axe de la cage, **caractérisée en ce qu'**à l'état profilé, découpé et non cintré de la bande de tôle (12), dans la zone des tronçons (8, 9) s'étendant en oblique, les poches (4), vues par le dessus adoptent un tracé courbé de façon à ce qu'un premier arc convexe B1 situé à l'intérieur en direction axiale passe dans un second arc concave B2 situé à l'extérieur.

2. Cage selon la revendication 1, **caractérisée en ce qu'**elle est conçue sous forme de M, ses tronçons (6, 7) se raccordant sur les bagues latérales (1, 2), s'étendant parallèlement à l'axe de la cage étant disposés à l'extérieur du cercle divisé.

3. Cage selon la revendication 1, **caractérisée en ce qu'**elle est conçue sous forme de W, ses tronçons (6, 7) se raccordant sur les bagues latérales (1, 2), s'étendant parallèlement à l'axe de la cage étant disposés à l'intérieur du cercle divisé.

4. Cage selon la revendication 1, **caractérisée en ce qu'**elle est guidée à l'extérieur, à l'intérieur ou par des corps de roulement.

5. Cage selon la revendication 1, **caractérisée en ce qu'**elle est intégrée dans un tourillon de manivelle ou dans un roulement planétaire.
